Europäisches Patentamt

European Patent Office

Office européen des brevets

(11) Publication number: **0 078 417**
**B1**

(12) **EUROPEAN PATENT SPECIFICATION**

(45) Date of publication of patent specification: **01.04.87**

(21) Application number: **82109429.9**

(22) Date of filing: **12.10.82**

(51) Int. Cl.⁴: **H 02 K 23/02, B 60 L 9/12**

(54) D.C. series motor for vehicles.

(30) Priority: **14.10.81 JP 162647/81**

(43) Date of publication of application:
**11.05.83 Bulletin 83/19**

(45) Publication of the grant of the patent:
**01.04.87 Bulletin 87/14**

(84) Designated Contracting States:
**DE FR GB**

(56) References cited:
**DE-B-1 157 257
DE-C- 276 990
DE-C- 594 373
DE-C- 596 466
DE-C- 674 671**

(73) Proprietor: **Hitachi, Ltd.
5-1, Marunouchi 1-chome
Chiyoda-ku Tokyo 100 (JP)**

(72) Inventor: **Ishikawa, Yoshihisa
8-19, Osecho-4-chome
Hitachi-shi (JP)**

(74) Representative: **Patentanwälte Beetz sen. -
Beetz jun. Timpe - Siegfried - Schmitt-Fumian
Steinsdorfstrasse 10
D-8000 München 22 (DE)**

Courier Press, Leamington Spa, England.

EP 0 078 417 B1

## Description

The present invention relates to a D.C. series motor for vehicles according to the preamble of Claim 1 suitable for a pulsating current operation.

The document DE—C—276 990 discloses a D.C. series motor for vehicles according to the preamble of Claim 1.

Such a D.C. motor used for railroad vehicles is driven not only by a D.C. current but also by a pulsating unidirectional current. Particularly, one of the reasons why the D.C. motor for railroad vehicles is driven by the pulsating current is that the D.C. motor is supplied with power through a pantagraph from a power supply source of different types and qualities, i.e. a single-phase A.C. source or a three-phase A.C. source, and the other reason is that a reactor of a filtering device for supplying power to the D.C. motor installed on a railroad vehicle is limited in its physical dimension and hence the rectification efficiency of the filtering device is lowered. From the reasons mentioned above, the D.C. motor for a railroad vehicle is not always supplied with a complete D.C. current, which results in driving of the D.C. motor by the pulsating motor including an A.C. component.

The D.C. series motor according to the DE—C—276 990, which is driven by a pulsating unidirectional current applied thereto, includes an armature, a main pole winding and a resistive shunt connected in parallel with said main pole winding for bypassing the pulsating unidirectional current flowing through said main pole winding.

An interpole winding connected in series with the armature and in series with the main pole winding which is mentioned in the preamble of Claim 1 is a feature for D.C. series motor which is commonly known and i.e. is disclosed in DE—C—674 671.

In a D.C. series motor known from DE—C—546 466, when it is operated by the pulsating current, a sparking voltage $E_s$ is generated due to a vector difference between a reactance voltage $E_r$ of the motor (a voltage between brushes of the D.C. motor) and a velocity e.m.f. $E_\phi$ generated by interpole magnetic fluxes. Means for compensating resultant sparking voltage $E_{sp}$ (3V) of the arc voltage $E_s$ and a transformer e.m.f. $E_t$ of a main pole has not been proposed. As a result, a commutation performance of the pulsating current driven motor for the rolling stocks has been low due to the resultant sparking voltage $E_{sp}$.

It is an object of the present invention to provide a D.C. motor for a vehicle operated by a pulsating current with a reduced resultant sparking voltage in order to improve a commutation performance in the pulsating current operation. The object is solved by the features in the characterizing part of the Claim 1.

The subclaims 2 and 3 characterize advantageous developments thereof.

Other objects, features and advantages of the present invention will be apparent from the following detailed description of the invention with reference to the accompanying drawings, in which:

Figure 1 shows a circuit configuration of a pulsating current motor to which the present invention is applicable;

Figure 2 shows a waveform illustrating a phase relationship between an armature current and an interpole magnetic flux of the pulsating current motor shown in Figure 1;

Figure 3 shows a vector diagram illustrating a relation among a reactance voltage, a velocity e.m.f. by the interpole magnetic flux and a sparking voltage of the pulsating current motor;

Figure 4 shows a vector diagram illustrating a relation among the reactance voltage, the velocity e.m.f. and the sparking voltage when a transformer e.m.f. is taken into consideration;

Figure 5 shows an equivalent circuit of a main pole under a field-weakening control;

Figure 6 shows a vector diagram illustrating a relation among the arc voltage, the transformer e.m.f. and a resultant sparking voltage when an inductance of an inductive shunt is varied; and

Figure 7 shows a relation between the inductance of the inductive shunt and the commutation spark numbers measured under the field-weakening control of the vehicle motor.

One embodiment of the present invention is now explained with reference to the drawings.

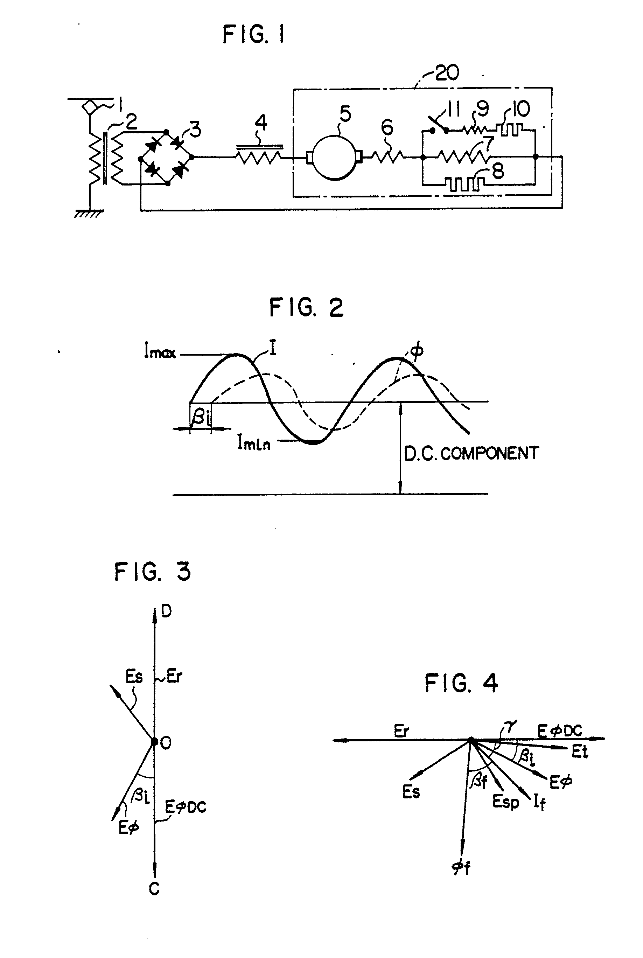

Figure 1 shows an armature circuit of a pulsating current driven D.C. motor to which the present invention is applicable. A single phase A.C. power supply is supplied to a transformer 2 from a stringing through a pantagraph 1, and an output from the transformer 2 is supplied to a main motor 20 through a rectifier (e.g. a diode bridge rectifier) 3 and a filtering reactor 4. A main pole 7 has a pure resistor 8 connected in parallel thereto to minimize a pulsating current component flowing through the main pole 7 so that a field current is shunted by the pure resistor 8.

An inductive shunt 9 and a field-weakening resistor 10 are selectively inserted by a switch 11 to effect a field-weakening control (high speed control). The inductive shunt 9 not only contributes to the field-weakening control but also contributes to improve a rectification performance in the pulsating current driven D.C. motor.

Figure 2 shows current waveforms of currents flowing through an armature 5 and an interpole 6. A pulsating factor $\mu$ is generally expressed by

$$\mu = \tfrac{1}{2} \cdot \frac{I_{max} - I_{min}}{I_{max} + I_{min}} \times 100 (\%) \tag{1}$$

The pulsating factor is 50%—25% at most in a present technology. When the pulsating current flows through the interpole circuit in the pulsating current operation, an eddy current flows through a magnetic circuit of the interpole because it includes a portion not completely laminated such as a magnetic frame so that an interpole magnetic flux $\phi$ is retarded by $\beta_i$ with respect to a current I and an amplitude thereof is reduced as shown in Figure 2. Accordingly, the commutation performance is lowered than when the motor is D.C. driven.

Figure 3 illustrates a relation thereof. When the vehicle motor is D.C. driven, the commutation performance is high because a reactance voltage $E_r$ and a velocity e.m.f. $E_{\phi DC}$ generated by the interpole magnetic flux are equal. However, when the rolling stocks motor is pulsating current driven, the velocity e.m.f. $E_{\phi DC}$ is changed to $E_\phi$ by the eddy current and a phase thereof is shifted by $\beta_i$ relative to the reactance voltage $E_r$ and an amplitude thereof is reduced. As a result, the reactance voltage $E_r$ and the velocity e.m.f. $E\phi$ generated by the interpole magnetic flux in the pulsating current operation do not cancel each other and a sparking voltage $E_s$ remains. This is one of the factors which lower the commutation performance in the pulsating current operation.

Another factor to lower the rectification performance is the transformer e.m.f. of the main pole. This is described below.

Figure 4 shows a vector diagram illustrating a relation among the reactance voltage $E_r$, the velocity e.m.f. $E_{\phi DC}$ and the sparking voltage $E_s$ when the transformer e.m.f. $E_t$ is taken into consideration. Since the main pole 7 has the field shunting resistor 8 to reduce the pulsating current component, the pulsating current component in the main pole 7 is smaller than the pulsating current component in the interpole 6 and the armature 5 and a phase thereof is retarded by $\gamma$. A phase of the transformer e.m.f. $E_t$ is retarded by ($\gamma+\beta_f-90°$) relative to the velocity e.m.f. $E_{\phi DC}$, where $\beta_f$ is a phase difference between the main pole magnetic flux and the main pole current. The commutation performance in the pulsating current operation is lowered because the resultant sparking voltage $E_{sp}$ of the transformer e.m.f. $E_t$ and the sparking voltage $E_s$ is not compensated. In Figure 4, $I_f$ denotes the pulsating current component of the main pole current and $\phi_f$ denotes the pulsating component of the main pole magnetic flux.

The commutation performance in the pulsating current operation is not seriously lowered to compare with the D.C. operation in a full field operation (low speed operation) but it is lowered in the field-weakening control (high speed operation). Therefore, only the field-weakening control is considered here.

The reactance voltage $E_r$, the velocity e.m.f. $E\phi$ by the interpole magnetic flux and the sparking voltage $E_s$ are constant for a given motor and cannot be changed. On the other hand, the magnitude and the phase of the transformer e.m.f. $E_t$ can be changed by appropriately selecting the inductance of the inductive shunt.

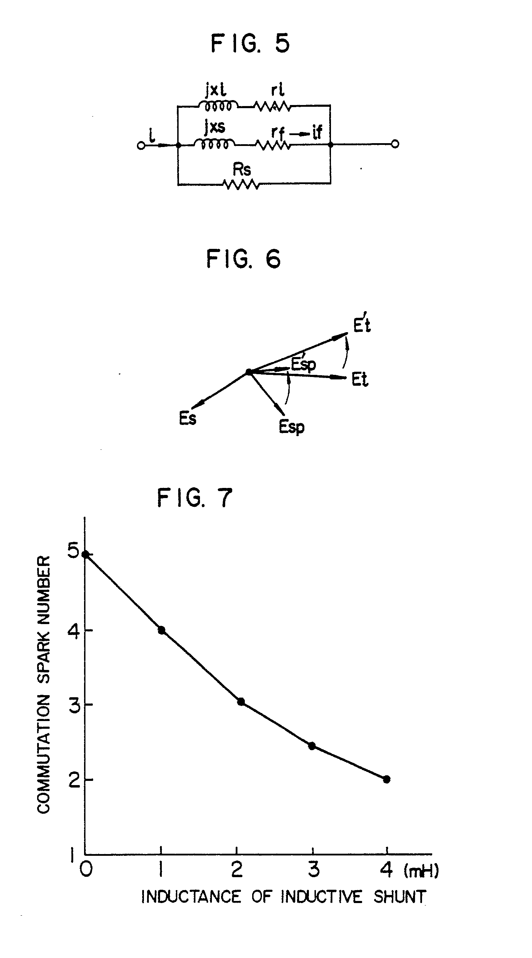

Figure 5 shows an equivalent circuit of the main pole under the field-weaking control. The current $i_f$ in the main pole is given by

$$i_f = i \cdot \frac{R_s(r_i + jX_i)}{R_s(r_i + jX_i) + R_s(jX_f + r_f) + (jX_i + r_i)(jX_f + r_f)} \tag{2}$$

where i is a current in the interpole and the armature, $X_i$ is the inductance of the inductive shunt, $r_i$ is the field-weaking resistance, $X_f$ and $r_f$ are an inductive component and a resistive component of the main pole winding and $R_s$ is a field shunt resistance. Figure 6 shows a vector diagram of the sparking voltage $E_s$, the transformer e.m.f. $E_t$ and the resultant sparking voltage $E_{sp}$ when $X_i$ is increased in the formula (2). As seen from Figure 6, as the magnitude and the phase of the transformer e.m.f. $E_t$ are increased, the magnitude of the resultant sparking voltage $E_{sp}$ -is reduced so that the commutation performance is improved.

Figure 7 shows a relation between the inductance of the inductive shunt and the rectification spark numbers (resultant sparking voltage $E_{sp}$) measured under the field-weakening control of the vehicle motor. The spark numbers include 1 to 5, in which 1 indicates a non-sparking condition and 5 indicates a highest sparking condition. As seen from Figure 7, as the inductance of the inductive shunt is increased, the commutation performance is remarkably improved.

Assuming that the practically acceptable spark numbers are 3 to 5, the inductance of larger than 2 mH is sufficient. The inductance of the main pole under this condition is approximately 10 mH. By providing the inductive shunt having the inductance which is at least 20% of the inductance of the main pole winding, the commutation performance in the pulsating current operation of the vehicle motor can be substantially improved.

As described hereinabove, according to the present invention, the inductive shunt having the inductance which is at least 20% of the inductance of the main pole winding is connected in parallel with the main pole winding. Accordingly, the vehicle motor having an improved commutation performance in the pulsating current operation is provided.

**Claims**

1. A D.C. series motor for vehicles, which is driven by a pulsating unidirectional current applied thereto, including:

3

an armature (5);

a main pole winding (7);

a resistive shunt (8) connected in parallel with said main pole winding (7) for bypassing the pulsating unidirectional current flowing through said main pole winding (7), and

an interpole winding (6) connected in series with said armature and in series with said main pole winding (7),

characterized by an inductive shunt (9) selectively connected in parallel with said main pole winding to reduce a resultant sparking voltage produced between brushes of said motor by increasing the magnitude and phase of a transformer electromotive force of said main pole winding, said inductive shunt having an inductance of at least 20% relative to that of said main pole winding, and

a switch (11) for providing selective connection of said inductive shunt in parallel with said main pole winding to effect a field-weakening control of said motor.

2. A D.C. series motor according to Claim 1, characterized by further comprising another resistive shunt (10) connected in series with said inductive shunt.

3. A D.C. series motor according to Claim 1, characterized by further comprising a transformer (2) having a primary winding connected to a pantagraph of a railroad vehicle, a rectifier (3) connected to a secondary winding of said transformer and a filter (4) connected to said rectifier (3) to provide the pulsating unidirectional current to the armature of said motor.

**Patentansprüche**

1. Gleichstrom-Reihenschlußmotor für Fahrzeuge, der von einem ihm zugeführten pulsierenden Gleichstrom angetrieben wird, mit:

einem Läufer (5);

einer Hauptpolwicklung .(7);

einem Widerstands-Nebenschluß (8), der der Hauptpolwicklung (7) parallelgeschaltet ist zur Umgehung des durch die Hauptpolwicklung (7) fließenden pulsierenden Gleichstroms, und

einer Wendepolwicklung (6), die in Reihe mit dem Anker und in Reihe mit der Hauptpolwicklung (7) liegt, gekennzeichnet durch

einen induktiven Nebenschluß (9), der der Hauptpolwicklung selektiv parallelgeschaltet ist zur Verringerung einer zwischen Bürsten des Motors erzeugten resultierenden Funkenspannung unter Erhöhung der Größe und Phase einer Transformations-EMK der Hauptpolwicklung, wobei der induktive Nebenschluß eine Induktivität von wenigstens 20% relativ zu derjenigen der Hauptpolwicklung hat, und

einen Schalter (11) zum selektiven Schalten des induktiven Nebenschlusses parallel zu der Hauptpolwicklung, so daß eine Feldschwächeregelung des Motors erfolgt.

2. Gleichstrom-Reihenschlußmotor nach Anspruch 1, ferner gekennzeichnet, durch einen weiteren Widerstands-Nebenschluß (10), der mit dem induktiven Nebenschluß in Reihe liegt.

3. Gleichstrom-Reihenschlußmotor nach Anspruch 1, ferner gekennzeichnet durch einen Transformator (2) mit einer Primärwicklung, die mit einem Scherenstromabnehmer eines Schienenfahrzeugs gekoppelt ist, einen mit einer Sekundärwicklung des Transformators gekoppelten Gleichrichter (3) und ein mit dem Gleichrichter (3) gekoppeltes Filter (4) zur Zuführung des pulsierenden Gleichstroms zum Läufer des Motors.

**Revendications**

1. Moteur série à courant continu pour véhicules qui est entraîné par un courant unidirectionnel pulsatoire qui lui est appliqué, comprenant:

— un induit (5);

— un enroulement formant pôle principal (7);

— un shunt résistif (8) branché en parallèle avec l'enroulement formant pôle principal (7) de manière à dériver le courant unidirectionnel pulsatoire traversant ledit enroulement formant pôle principal (7), et

— un enroulement (6) monté entre pôles et raccordé en série avec ledit induit et en série avec ledit enroulement formant pôle principal (7), caractérisé par

— un shunt inductif (9) raccordé de façon sélective en parallèle avec ledit enroulement formant pôle principal de manière à réduire une tension d'amorçage produite entre les balais dudit moteur par accroîssement de l'intensité et de la phase d'une force électromotrice de transformation dudit enroulement formant pôle principal, ledit shunt inductif possédant une inductance égale à au moins 20% de celle dudit enroulement formant pôle principal, et

— un interrupteur (11) pour réaliser le raccordement sélectif dudit shunt inductif en parallèle avec ledit enroulement formant pôle principal de manière à réaliser la commande dudit moteur par affaiblissement du champ.

2. Moteur série à courant continu selon la revendication 1, caractérisé en ce qu'il comporte en outre un autre shunt résistif (10) branché en série avec ledit shunt inductif.

3. Moteur série à courant continu selon la revendication 1, caractérisé en ce qu'il comporte en outre un transformateur (2) comportant un enroulement primaire raccordé à un pantographe d'un véhicule

**0 078 417**

ferroviaire, un redresseur (3) raccordé à un enroulement secondaire dudit transformateur et un filtre (4) raccordé audit redresseur (3) de manière à envoyer le courant unidirectionnel pulsatoire à l'induit dudit moteur.

0 078 417

FIG. 1

FIG. 2

FIG. 3

FIG. 4

1

FIG. 5

FIG. 6

FIG. 7